# EUROPÄISCHE PATENTSCHRIFT

(11) **EP 2 502 693 B1**
(45) Veröffentlichungstag und Bekanntmachung des Hinweises auf die Patenterteilung: **02.08.2017**
(21) Anmeldenummer: 12160510.9
(22) Anmeldetag: 21.03.2012
(51) Int. Cl.: B23B 31/107, B23B 51/04

(54) **Schnellwechseladapter für eine Lochsäge**
Quick change adapter for a hole saw
Adaptateur de changement rapide pour une scie à trous

(30) Priorität: 21.03.2011 DE 102011001446
(43) Veröffentlichungstag der Anmeldung: 26.09.2012
(73) Patentinhaber: wolfcraft GmbH, 56746 Kempenich (DE)
(72) Erfinder: Ebert, Winfried, 56745 Weibern (DE)
(74) Vertreter: Grundmann, Dirk

(56) Entgegenhaltungen:
- DE-A1- 19 740 277
- DE-A1-102006 016 804
- JP-A- 57 201 114
- US-A- 2 468 874
- US-A1- 2007 269 280

## Beschreibung

Die Erfindung betrifft einen Schnellwechseladapter für spanabhebende Werkzeuge, gemäß dem Oberbegriff des Anspruchs 1, insbesondere eine Lochsäge oder einen Bohrer, mit einem Antriebsschaft zum Einstecken in ein Antriebsfutter einer Drehantriebsvorrichtung, einer Aufnahmeöffnung zur Aufnahme eines Antriebsflansches, insbesondere eines zylindrischen Bohrers und einer Betätigungshülse, die von einer Verriegelungsstellung, in der ein Verriegelungselement vor einer Blockierschulter des Antriebsflansches liegt, um den Antriebsflansch gegen ein Herausziehen aus der Aufnahmeöffnung zu sichern, in eine Freigabestellung bringbar ist, in der sich das Verriegelungselement ein Herausziehen des Antriebsflansches aus der Aufnahmeöffnung ermöglichend von der Blockierschulter entfernen kann.
Ein derartiger Schnellwechseladapter für eine Lochsäge wird in der DE 20113 578 U1 beschrieben. Die Lochsäge besitzt einen becherförmigen Kopf, der somit einen zylindrischen Bohrer ausbildet. Der zylindrische Bohrer hat eine am Rand entlang einer Zylindermantelfläche verlaufenden Wandung angeordnete Verzahnung und ist somit spanabhebend profiliert. Rückwärtig ragt aus dem Boden des den Kopf bildenden Bechers ein Antriebsflansch, der in einer Aufnahmeöffnung eines Halters steckt. Der Halter ist im Bereich der Aufnahmeöffnung von einer Betätigungshülse umgeben, die ein Fenster überdeckt, in dem eine Verriegelungskugel einliegt, die in der Verriegelungsstellung vor einer Blockierschulter des Antriebsflansches liegt. Die Blockierschulter wird hier von einer Ringnut ausgebildet. Der Antriebsschaft besitzt eine Höhlung, die von einem Schaft eines Zentrierbohrers durchragt ist. Der Schaft des Zentrierbohrers besitzt an seinem rückwärtigen Ende eine Ringnut, in die ebenfalls ein von einer Kugel ausgebildetes Verriegelungselement eingreift.

Aus der US 2007/0269280 A1 ist ebenfalls eine Lochsäge mit einem zylindrischen Bohrer vorbekannt, der mit einem Antriebsflansch in einer Aufnahmeöffnung eines Halters steckt und dort von einem die Form einer Kugel aufweisenden Verrieglungselement gehalten ist, welches mit einer Betätigungshülse zusammenwirkt. Auch dort greift die Verriegelungskugel in eine Ringnut ein. Der sich in einer Zentrumsbohrung des Antriebsflansches steckende Schaft eines Zentrierbohrers wird mit einem zwei Kugeln aufweisenden Verrieglungselement in einer Fesselungsstellung gehalten.

Die DE 29711064 U1 beschreibt ein Schnellwechselfutter für Bohrer, Senker oder Gewindebohrer, die jeweils einen Antriebsflansch aufweisen, der eine Ringnut besitzt, in die eine Verriegelungskugel des Halters eingreift. Die US 6,623,220 B2 beschreibt eine Schnellspannvorrichtung für eine Lochsäge mit Zentrierbohrer, wobei der Antriebsflansch ebenfalls eine Ringnut aufweist, in die eine in einem Fenster des Halters einliegende Verriegelungskugel eingreift, die in der Verriegelungsstellung vor einer Verriegelungsschulter der Betätigungshülse liegt. In einer Zentrumsbohrung des Antriebsflansches steckt ein Adapter mit einer Aufnahmehöhlung, in der der Schaft eines Zentrierbohrers steckt, in dessen Ringnut eine weitere Verriegelungskugel eingreift.

Aus der DE 102006016804 A1 ist ein Werkzeughalter für einen Bohrhammer bekannt. Der Schaft eines Einsteckwerkzeuges besitzt eine durch Prägen erzeugt Rippe, die eine Blockierschulter ausbildet.

Die JP 57-201114 zeigt ein Futter, mit dem der Schaft eines Werkzeuges gehalten werden kann. Eine Madenschraube greift dabei in eine radiale Ausnehmung des Schaftes ein.

Die DE 19740277 A1 beschreibt ein Bohrwerkzeug, wobei der Schaft eines Bohrers zwei durch Prägen erzeugte radial abragende Flügel besitzt, die jeweils Blockierschultern ausbilden.

Die US 2,468,874 beschreibt einen Bohrer mit einem Schaft zum Einstecken des Bohrers in ein Futter. Der Schaft besitzt ein oder mehrere durch Prägen erzeugte Blockierschultern, die radial nach außen abragen.

Der Erfindung liegt die Aufgabe zugrunde, den Schnellwechseladapter gebrauchsvorteilhaft weiterzubilden.

Gelöst wird die Aufgabe durch die in den Ansprüchen angegebene Erfindung, wobei zunächst und im Wesentlichen vorgeschlagen wird, dass die Blockierschulter von einer kuppelförmigen Erhebung ausgebildet ist, die von einer in einer Aussparung einsteckenden Kugel ausgebildet ist. Die Kugel kann in einer von einer Sackbohrung ausgebildeten Aussparung eingepresst oder eingeklebt sein, so dass ein Oberflächenabschnitt aus der im Wesentlichen glattwandigen Außenwand des Antriebsflansches herausragt. Es sind folgende vorteilhafte Ergänzungen vorgesehen: Der Einsteckabschnitt, mit dem der Antriebsflansch in der Aufnahmeöffnung des Halters steckt, füllt die Aufnahmeöffnung im Wesentlichen formausfüllend aus. Die Innenwandung der Aufnahmeöffnung kann eine Axialnut aufweisen, in die die kuppelförmige Erhebung eingreift. Zufolge dieser Axialnut erhält die ansonsten einen kreisrunden Grundriss aufweisende Aufnahmeöffnung einen unrunden Abschnitt. Der in diese Axialnut hineinragende kuppelartige Vorsprung der Blockierschulter bildet somit nicht nur einen Orientierungsindex, sondern auch eine Drehsicherung oder, falls bereits ein Mehrkantabschnitt vorhanden ist, der in einer Mehrkantöffnung einliegt, eine zusätzliche Drehsicherung. In einer bevorzugten Ausgestaltung liegt die kupim zusammengebauten Zustand unmittelbar oberhalb des Bodens der Aufnahmeöffnung. Der Antriebsschaft kann mit einem Bohrer verbunden sein. Er kann insbesondere mit einer Gewindeverbindung mit dem Boden des becherförmigen, glockenförmigen, jedenfalls bevorzugt eine Höhlung aufweisenden zylindrischen Bohrers verbunden sein. Der Antriebsschaft kann eine zentrale Bohrung aufweisen, in die der Schaft eines Bohrers eingesteckt werden kann. Bevorzugt ist die zentrale Bohrung eine Zentrierbohrung, in der der Schaft eines Zentrierbohrers steckt, dessen Spitze den Rand des zylindrischen Bohrers überragt. Dieser Rand ist mit einer spanabhebenden Profilierung versehen. Er kann beispielsweise eine Verzahnung aufweisen. Es ist... aber auch möglich, dass dieser Rand eine Hartstoffbeschichtung, beispielsweise eine Diamantbeschichtung, aufweist. Der Schaft des Zentrierbohrers wird ebenfalls mit Verriegelungselementen im Halter fixiert. Hierzu ragt ein Endabschnitt des Schaftes des Bohrers in eine Sackbohrung des Halters hinein, die eine durchmesserverminderte Verlängerung der Aufnahmeöffnung ist. Der Halter ist von einer Betätigungshülse umgeben. Diese Betätigungshülse ist gegen die Rückstellkraft einer Feder von einer Verriegelungsstellung in eine Freigabestellung verlagerbar. In der Verriegelungsstellung liegt ein Verriegelungselement in Form einer Verriegelungskugel vor der kuppelförmigen Erhebung. Eine Sperrkugel liegt in einer Ringnut des Schaftes des Zentrierbohrers. Vor dieser Verriegelungskugel liegt in einer sich in Radialrichtung erstreckenden Bohrung eine weitere Verriegelungskugel, die vor einer Verriegelungsschulter der Betätigungshülse liegt. Beide Verriegelungskugeln liegen somit jeweils vor einer Verriegelungsschulter, die von einem Innenwandungsabschnitt der Betätigungshülse ausgebildet werden. Wird die Betätigungshülse von der Verriegelungsstellung axial verschoben, so verlagert sich auch die Verriegelungsschulter, so dass zunächst eine Übergangszone in Form einer Schrägflanke radial außerhalb der Verriegelungskugeln liegt. Da der Abstand der Übergangszonen kleiner ist, als der Abstand der beiden Verriegelungskugeln, werden die beiden Verriegelungskugeln beim Axialverlagern der Betätigungshülse nacheinander in ihre Freigabestellung verlagert. Je nachdem welche der beiden Verriegelungen, also die des Zentrierbohrers oder die des Antriebsschaftes zuerst in die Freigabestellung verlagert werden soll, ist der Abstand der Übergangszonen entweder kleiner oder größer als der Abstand der Verriegelungskugel. An die Übergangszonen schließen sich jeweils durchmesservergrößerte Freigabenischen an, in die die Verriegelungskugeln eintreten können, damit der Zentrierbohrer oder der Antriebsschaft aus dem Halter herausgezogen werden kann. Die mit der kuppelförmigen Erhebung zusammenwirkende Verriegelungskugel liegt in einem Fenster einer Wandung der Aufnahmeöffnung ein. Die Wandungsstärke ist geringer als der Durchmesser der Verriegelungskugel, so dass ein Oberflächenabschnitt der Verriegelungskugel in der Verriegelungsstellung in die Axialnut hineinragt und vor der kuppelförmigen Erhebung liegt. Die beiden Verriegelungskugeln, die das Verriegelungselement bilden, mit denen der Zentrierbohrer im Halter befestigt ist, liegen in einer Radialbohrung ein, die axial rückwärtig der Aufnahmeöffnung bzw. des Antriebsschaftes angeordnet ist. Der eine Ringnut aufweisende Schaft des Zentrierbohrers erstreckt sich bis in den Bereich einer Diagonalbohrung. Im Endabschnitt der den Bohrerschaft aufnehmenden Sackbohrung steckt ein Distanzstück, auf welchem sich die rückwärtige Stirnfläche des Zentrierbohrerschaftes abstützt.

Ausführungsbeispiele der Erfindung wird nachfolgend anhand beigefügter Zeichnungen erläutert. Es zeigen:

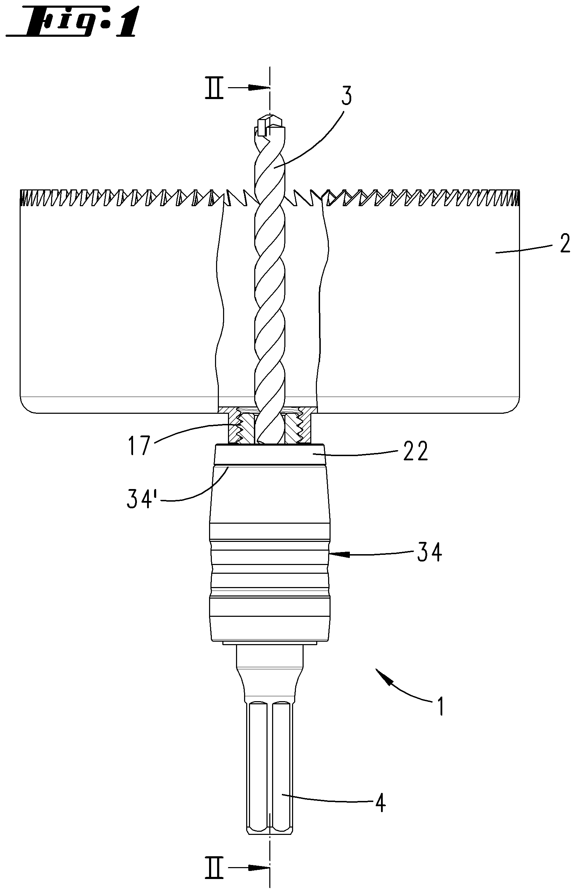

- Fig. 1: eine Seitenansicht - teilweise aufgebrochen - eines ersten Ausführungsbeispiels,

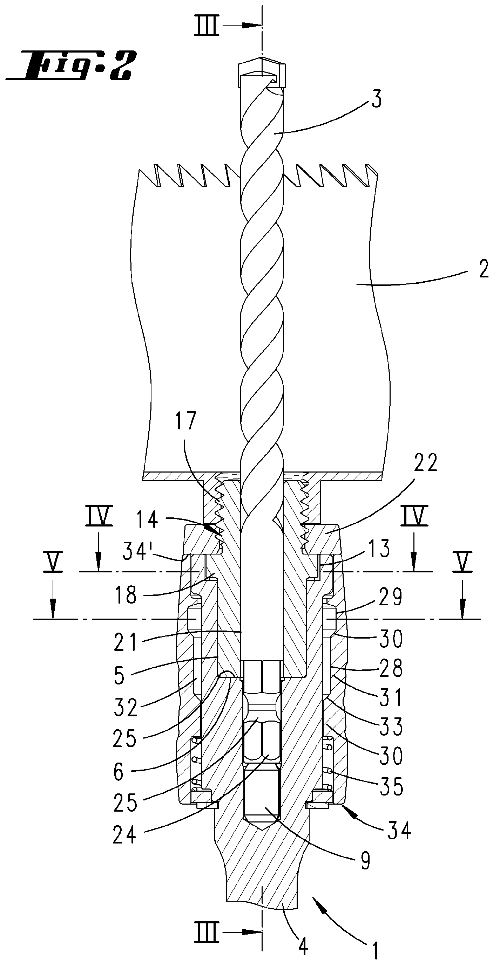

- Fig. 2: einen vergrößerten Schnitt gemäß der Linie II-II,
- Fig. 3: einen Schnitt gemäß der Linie III-III in Fig. 2,

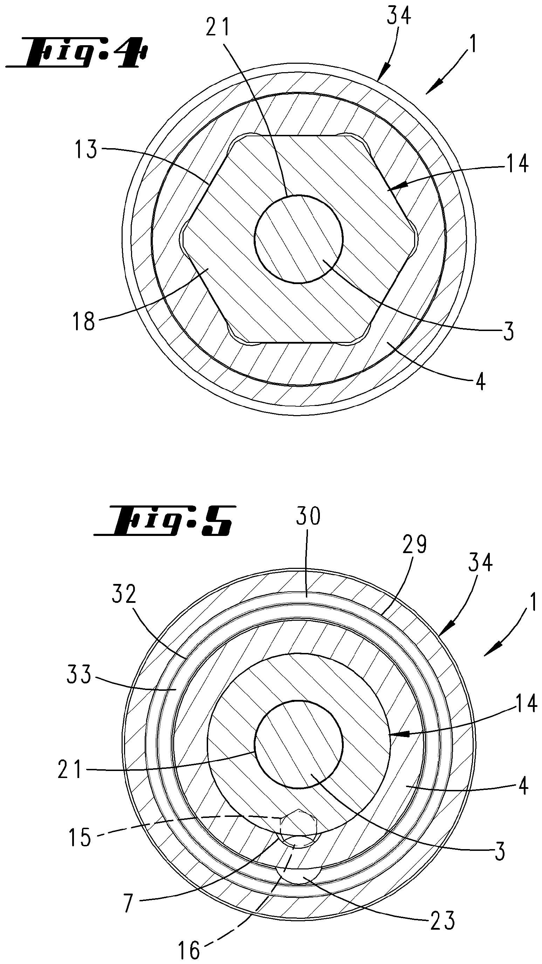

- Fig. 4: einen Schnitt gemäß der Linie IV-IV in Fig. 2 durch einen Mehrkantabschnitt der Aufnahmeöffnung bzw. des Antriebsflansches,
- Fig. 5: einen Schnitt gemäß der Linie V-V in Fig. 2 durch einen Axialkanal, in den die eine Blockierschulter ausbildende kuppelförmige Erhebung hineinragt,

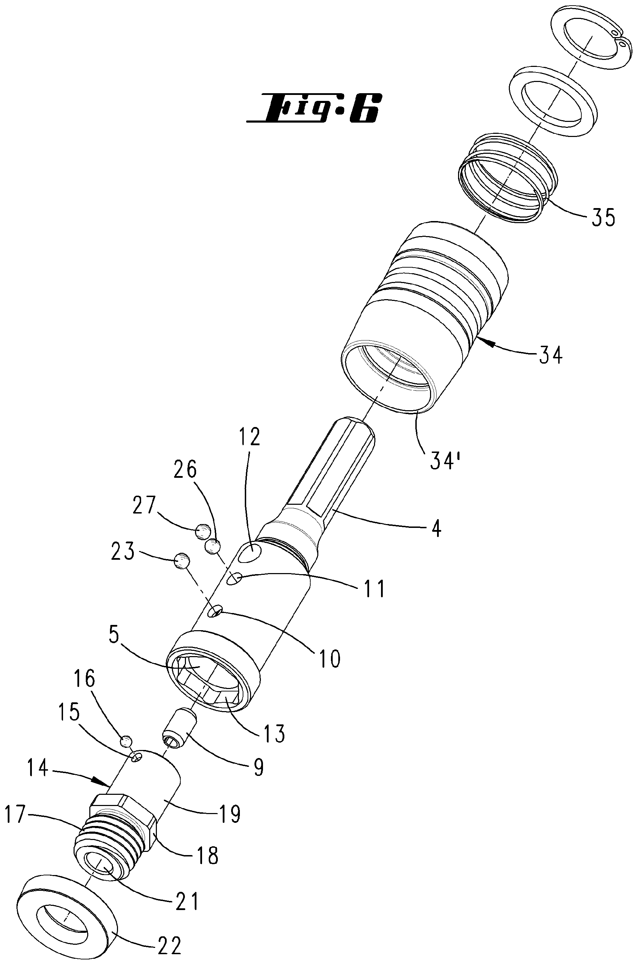

- Fig. 6: eine Explosionsdarstellung des Halters und des Antriebsschaftes,
- Fig. 7: eine Darstellung gemäß Fig. 3, wobei die Betätigungshülse von der in Fig. 3 dargestellten Verriegelungsstellung in eine erste Freigabestellung verlagert ist, in der der Antriebsschaft aus der Aufnahmehöhlung herausziehbar ist,
- Fig. 8: eine Darstellung gemäß Fig. 7 mit vollständig in Freigabestellung verlagerter Betätigungshülse, in der auch der Zentrierbohrer aus der ihm zugeordneten Sackbohrung herausgezogen werden kann,
- Fig. 9: ein zweites Ausführungsbeispiel in einer Darstellung gemäß Fig. 3, jedoch ohne Bohrer,
- Fig. 10: ein drittes Ausführungsbeispiel in einer Darstellung gemäß Fig. 3, jedoch ohne eingesteckten Antriebsflansch 14,

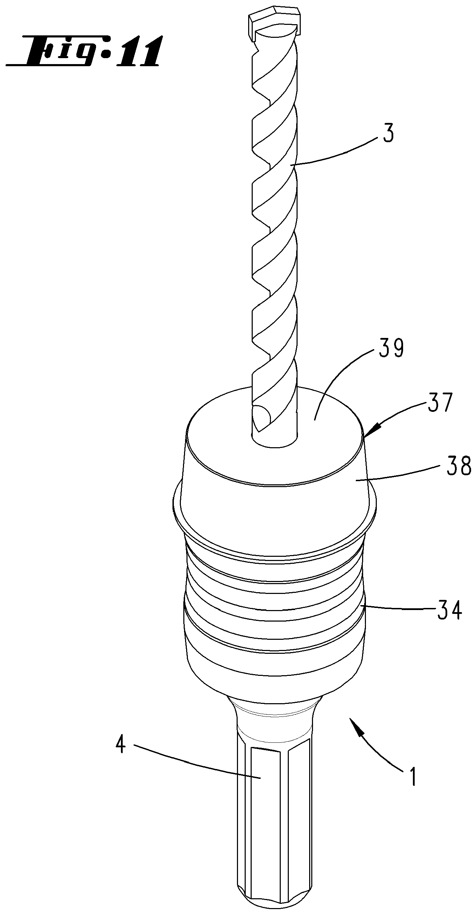

- Fig. 11: eine perspektivische Darstellung des dritten Ausführungsbeispiels,
- Fig. 12: eine geschnittene Darstellung des Antriebsflansches eines nicht erfindungsgemäßen vierten Ausführungsbeispiels,
- Fig. 13: eine perspektivische Darstellung des Antriebsflansches eines nicht erfindungsgemäßen fünften Ausführungsbeispiels, und
- Fig. 14: einen vergrößerten Schnitt gemäß der Linie XIV-XIV in Fig. 13.

Bei den in den Zeichnungen dargestellten Ausführungsbeispielen handelt es sich um einen Adapter, der mit verschiedenen Bohrern bestückbar ist. Er kann einen zylindrischen Bohrer 2 tragen, mit dem Kernbohrungen bohrbar sind. Er kann aber auch einen zentralen, mit einer Spitze versehenen Bohrer 3 tragen, mit dem kernlose Löcher gebohrt werden können.

In den Zeichnungen ist der erfindungsgemäße Schnellwechseladapter als Träger einer Lochsäge, mit der Kernbohrungen gefertigt werden können, dargestellt. Hierzu ist ein zylindrischer Bohrer 2 vorgesehen, der einen becherartigen Körper ausbildet. Auf dem auf einer Kreisbogenlinie um einen Zentrierbohrer 3 verlaufenden Rand des zylindrischen Bohrers 2 sind spanerzeugende Profilierungen vorgesehen. Im Ausführungsbeispiel handelt es sich um eine Verzahnung. Es ist aber auch vorgesehen, dass der Rand mit Hartstoffteilchen, beispielsweise Diamanten, bestückt ist. Diese Diamanten können in einer galvanischen Einfassung eingefasst sein. Der zylindrische Bohrer 2 bildet eine Höhlung aus, die vom Zentrierbohrer 3 durchragt ist. Der Boden des Bechers, der dem mit spanabhebendem Mittel versehenen Rand gegenüber liegt, bildet ein Innengewinde aus, in das das Außengewinde 17 eines Antriebsflansches 14 eingeschraubt ist. Der Antriebsflansch 14 besitzt eine Zentrumsbohrung 21, die vom Schaft 24 des Zentrierbohrers 3 durchgriffen ist. Ein sich unmittelbar an das Außengewinde 17 anschließender radial nach außen ragender Bund bildet einen Mehrkantabschnitt 18 aus. Diesem Mehrkantabschnitt 18 schließt sich ein im Wesentlichen zylindrischer Endabschnitt des Antriebsflansches 14 an, der eine glattwandige Oberfläche aufweist. Benachbart zur Stirnseite 20 befindet sich nahe am Ende des Antriebsflansches 14 eine radiale Sackbohrung 15, in der derart eine Blockierkugel 16 steckt, dass ein Oberflächenabschnitt der Blockierkugel 16 über die Außenwand 19 ragt.

Der Halter 1 besitzt einen Antriebsschaft 4, der mehrkantig ausgebildet ist. Der Antriebsschaft 4 kann auch anderweitig ausgebildet sein. Beispielsweise ist es möglich, diesen so zu profilieren, dass er in ein SDS-Futter passt. Bevorzugt ist der Antriebsschaft 4 jedenfalls unrund ausgebildet. Er kann aber auch einen kreisrunden Querschnitt aufweisen. Die dem Antriebsschaft 4 gegenüberliegende Stirnseite des Halters 1 weist eine zur Stirnseite offene Aufnahmeöffnung 5 auf, die so ausgebildet ist, dass sie den im Wesentlichen kreiszylinderförmigen Abschnitt des Antriebsschaftes 14 formausfüllend aufnimmt. Unmittelbar vor der Mündung der Aufnahmeöffnung 5 weist sie einen Mehrkantabschnitt 13 auf, in dem formschlüssig der Mehrkantabschnitt 18 des Antriebsflansches 14 einliegt, so dass sich der Antriebsflansch 14 nicht gegenüber dem Halter 1 drehen kann. Die Stirnseite des Halters 1 liegt vor einer Unterlegscheibe oder einer Kontermutter 22 des Antriebsflansches 14.

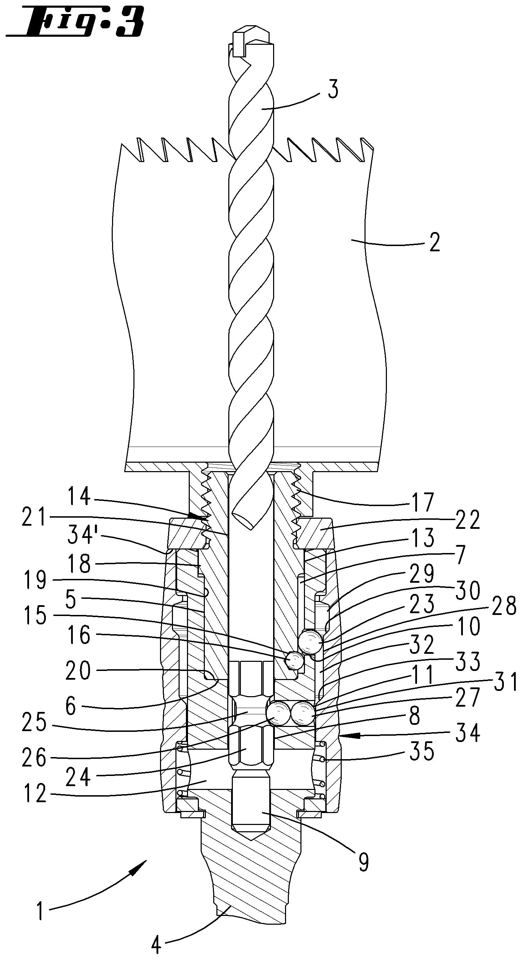

Die Innenwandung der Aufnahmeöffnung 5 weist einen in Achsrichtung des Halters verlaufenden Kanal 7 auf. Dieser Axialkanal 7 bildet eine in der Wandung der Aufnahmeöffnung 5 exzentrisch angeordnete Axialnut. Der Boden des im Querschnitt gerundeten Axialkanals 7 bildet ein Fenster 10 aus, in dem eine Verriegelungskugel 23 einliegt, deren Durchmesser größer ist, als die Materialstärke des Fensters, so dass in der in Fig. 3 dargestellten Verriegelungsstellung ein Oberflächenabschnitt der Verriegelungskugel 23 vor der Blockierkugel 16 liegt und so der Antriebsflansch 14 axialfest in der Aufnahmeöffnung 5 gehalten wird.

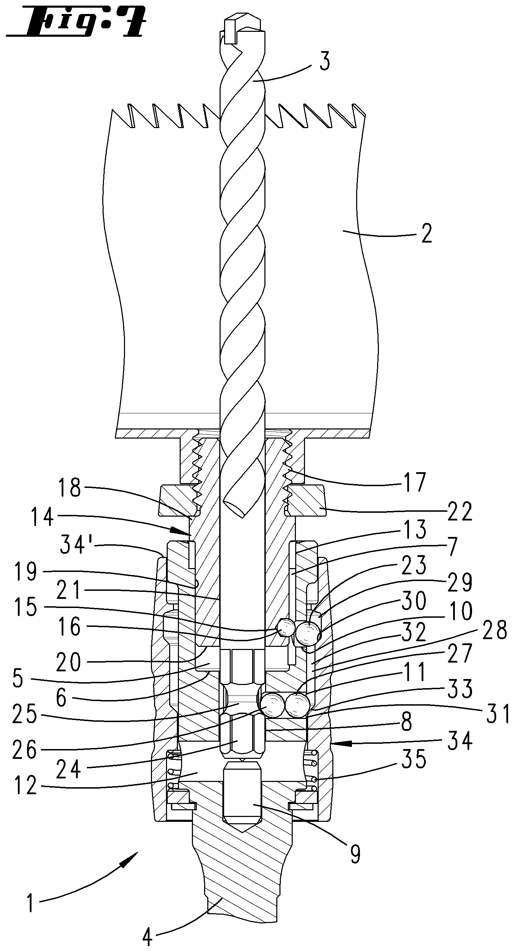

Die radial außen liegende Seite der Verriegelungskugel 23 stützt sich in der Verriegelungsstellung an einer Verriegelungsschulter 28 der Innenseite einer Betätigungshülse 34 ab, die den Halter 1 im Bereich der Aufnahmeöffnung 4 umgibt und die von einer Druckfeder 35 in der Verriegelungsstellung gehalten wird. An die Verriegelungsschulter 28 schließt sich eine Schrägflanke 30 an, die in eine Freigabenische 29 übergeht. Durch axiale Verlagerung der Betätigungshülse 34 von der in Fig. 3 dargestellten Verriegelungsstellung in die in Fig. 7 dargestellte erste Freigabestellung gelangt die Freigabenische 29 auf axiale Höhe zur Verriegelungskugel 23, so dass diese radial nach außen ausweichen kann und den Axialkanal 7 freigibt, so dass sie nicht mehr vor der Blockierkugel 16 liegt. Der Antriebsflansch 14 kann somit aus der Aufnahmeöffnung 5 herausgezogen werden.

Die Druckfeder 35 hat eine weitere Funktion. Sie beaufschlagt nämlich die Betätigungshülse 34 in Richtung der Kontermutter 22 derart, dass der Rand 34' gegen die Kontermutter gedrückt wird, so dass hierdurch eine Dichtwirkung gegeben ist. Es wird vermieden, dass Staub oder dergleichen durch den Spalt zwischen dem Rand 34' und der Kontermutter 22 in den Halter eindringen kann.

Im Boden 6 der Aufnahmeöffnung 5 befindet sich eine Mündung einer im Querschnitt mehrkantigen Sackbohrung 8, in der drehfest das mehrkantige Ende des Schaftes 24 einsteckt. Die rückwärtige Stirnseite des Schaftes 24 des Zentrierbohrers 3 stützt sich dabei auf einem Distanzstück 9 ab, welches sich wiederum am Boden der Sackbohrung 8 abstützt. Die Abstützzone zwischen Distanzstück 9 und Schaft 24 liegt in einer Querbohrung 12 durch den Kopf des Halters 1, die zur Vereinfachung der Fertigung der Mehrkantbohrung 8 dient. Die Mehrkantbohrung kann zufolge der Querbohrung geräumt werden. Durch die Querbohrung können die Späne herausfallen.

Zwischen der Diagonalbohrung 12 und dem Boden 6 der Aufnahmeöffnung 5 ist eine Querbohrung 11 vorgesehen, die in die Sackbohrung 8 mündet und in der zwei in Radialrichtung nebeneinander liegende Kugeln 26, 27, einliegen. Anstelle der beiden Kugeln 26, 27 kann dort aber auch ein Stift, insbesondere mit gerundeten Stirnflächen, vorgesehen sein. Die radial innenliegende Kugel 26 ragt in der in Fig. 3 dargestellten Verriegelungsstellung in eine Ringnut des Schaftes 24 des Zentrierbohrers 3 ein, um den Zentrierbohrer 3 drehfest an den Halter 1 zu fesseln. Die an diese Sperrkugel 26 anstoßende Verriegelungskugel 27 stützt sich in der Verriegelungsstellung an einer Verriegelungsschulter 31 der Betätigungshülse ab. Die Verriegelungsschulter 31 geht auch hier unter Ausbildung einer Schrägflanke 33 in eine Freigabenische 32 über, wobei der Boden der Freigabenische 32 die Verriegelungsschulter 28 für die Verriegelungskugel 23 ausbildet.

Der Abstand der beiden Schrägflanken 30, 33 ist etwas geringer als der Abstand der Verriegelungskugel 23 von der Verriegelungskugel 27, so dass in der in Fig. 7 dargestellten ersten Freigabestellung die Verriegelungskugel 27 noch von einem Abschnitt der Schrägflanke 33 in ihrer Verriegelungsstellung gehalten wird, während die Verriegelungskugel 23 sich bereits in ihrer Freigabestellung befindet.

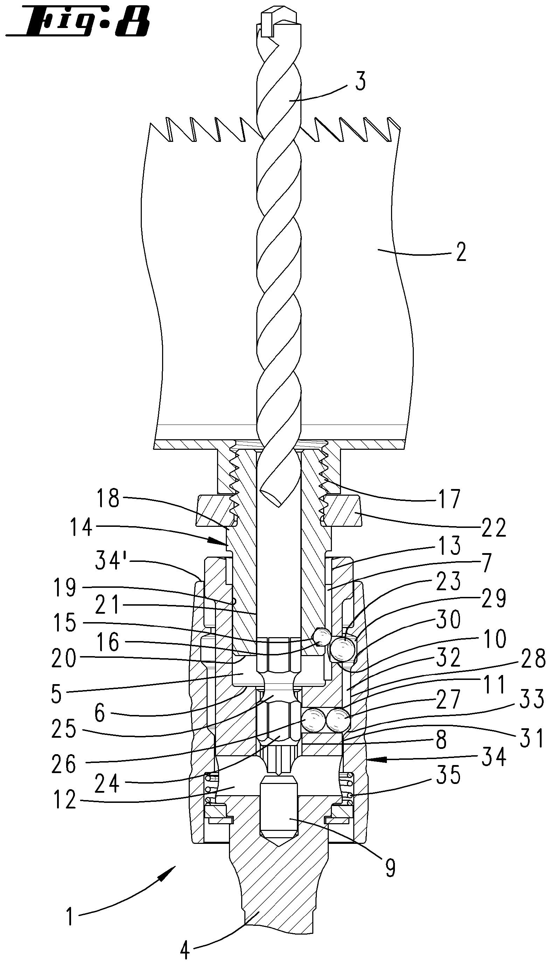

Erst wenn die Betätigungshülse bis in die in Fig. 8 dargestellte Freigabestellung verlagert ist, kann auch die Verriegelungskugel 27 in die ihr zugeordnete Freigabenische 32 eintauchen, so dass die Sperrkugel 26 aus der Ringnut 25 austritt und das Herausziehen des Zentrierbohrers 3 aus der Sackbohrung 8 ermöglicht. Zufolge der zweistufigen Entriegelung ist es möglich, den zylindrischen Bohrer 2 vom Halter 1 zu entfernen, wobei der Zentrierbohrer 3 am Halter 1 gefesselt bleibt.

Durch eine abweichende Gestaltung der Betätigungshülse und insbesondere durch Modifikation von deren Verschieberichtung ist es auch möglich, bei einer zweistufigen Entriegelung zunächst den Zentrierbohrer 3 und erst im Anschluss daran den zylindrischen Bohrer 2 zur Entnahme aus dem Halter 1 freizugeben.

Die Ausgestaltung der Blockierschulter als kuppelartige Erhebung hat den Vorteil, dass der in der Aufnahmeöffnung 5 einsteckende Abschnitt des Antriebsflansches 14 einen sehr geringen Durchmesser aufweisen kann. Dies ermöglicht eine schlanke Bauform des Halters. Es ist ferner von Vorteil, wenn die kuppelförmige Erhebung 16 von einer Blockierkugel ausgebildet ist. Derartige Blockierkugeln können einfach gefertigt werden und eine größere Oberflächenhärte aufweisen, als der Antriebsflansch 14, so dass die erfinderische Lösung auch einen herstellungstechnischen Vorteil bringt.

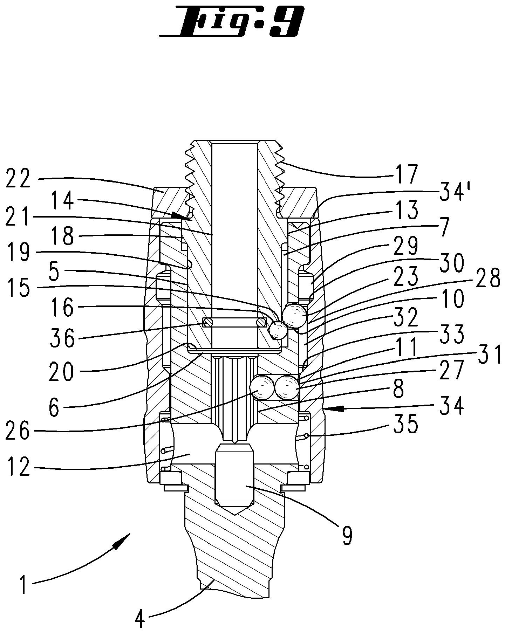

Bei dem in der Fig. 9 dargestellten zweiten Ausführungsbeispiel ist ebenfalls eine federbeaufschlagte Betätigungshülse 34 vorgesehen, deren Rand 34' dichtend an der Überwurfmutter 22 anliegt. Zusätzlich ist hier innerhalb der Zentrumsbohrung 21 ein Dichtring 36 vorgesehen, der in einer Ringnut liegt und der sich in dichtender Anlage an den Schaft des Bohrers 3 anschmiegt.

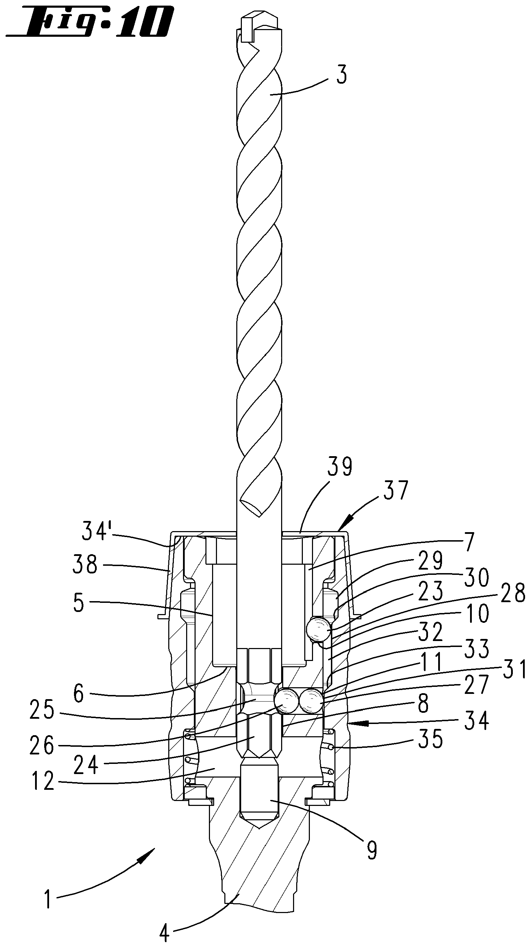

Bei dem in Fig. 10 dargestellten Ausführungsbeispiel ist der Antriebsflansch 14 aus dem Halter 1 entfernt worden. In dem Halter 1 steckt jetzt lediglich ein Bohrer 3. Um zu vermeiden, dass Staub in den Halter und insbesondere in die Aufnahmeöffnung 5 gelangt, ist die Stirnseite des Halters 1 mit einer Schutzkappe 37 versehen. Die Schutzkappe bildet eine Stirnseite 39 mit einer Öffnung aus, die sich eng an den Schaft des Bohrers 3 anschmiegt. Des weiteren bildet die Schutzkappe 37 eine Manschette 38 aus, die sich an die Außenwandung der Betätigungshülse 34 anschmiegt. Auch hier kann der Rand 34' federbeaufschlagt an der Innenseite der Stirnseite 39 anliegen. Da die Manschette 38 konusförmig verläuft und der stirnseitige Abschnitt der Betätigungshülse 34 eine dazu korrespondierende Außenkonusfläche aufweist, bildet sich eine Konusanlage. Die Druckfeder 35 sorgt dafür, dass die konusförmig verlaufende Mantelwand der Betätigungshülse 34 an der Innenwand der Manschette 38 anliegt.

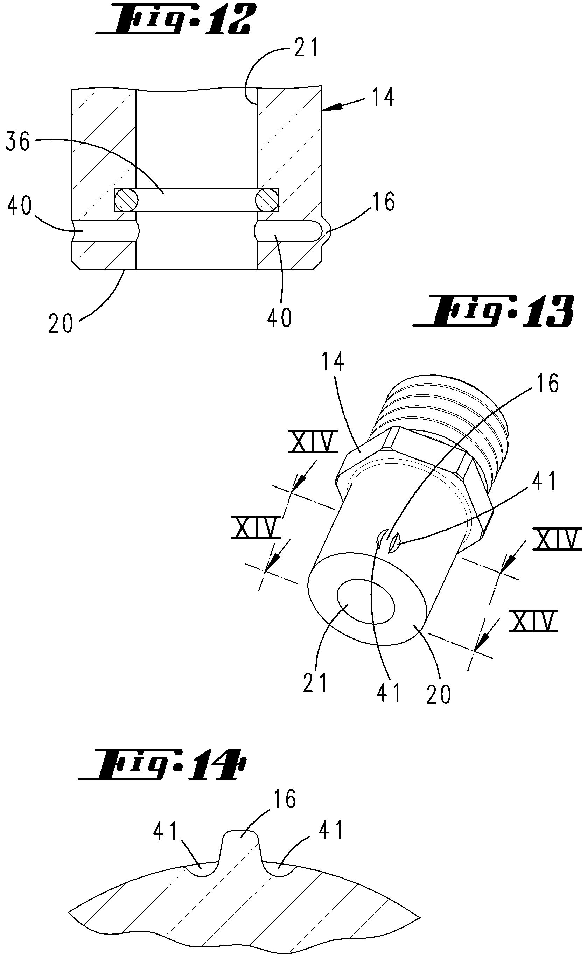

Bei dem in der Fig. 12 dargestellten nicht erfindungsgemäßen Ausführungsbeispiel ist die kuppelförmige Erhebung 16 von einer Ausprägung ausgebildet. Der Antriebsflansch 14 besitzt hierzu nahe seiner rückwärtigen Stirnseite 20 eine Querbohrung 40, die durch die Zentrumsbohrung 21 hindurchgeht, jedoch insgesamt als Sackbohrung ausgebildet ist. Mittels eines Prägewerkzeuges, welches in die Bohrung 40 hineingesteckt wird, kann der Boden der Bohrung 40 nach außen ausgeprägt werden, so dass sich die kuppelförmige Erhebung 16 ausbildet.

Bei dem in den Figuren 13 und 14 dargestellten nicht erfindungsgemäßen fünften Ausführungsbeispiel wird die kuppelförmige Erhebung 16 durch eine Quetschung erzeugt. Mittels eines zwei Quetschbacken aufweisenden Quetschwerkzeuges werden in die Außenfläche des Antriebsflansches 14 Vertiefungen 41 eingedrückt, die zu einer Materialaufwerfung im Zwischenbereich zwischen den Vertiefungen 41 führt. Diese durch Quetschung erzielte Materialaufhäufung bildet die kuppelförmige Erhebung 16.
Der in den Zeichnungen dargestellte Schnellwechseladapter kann auch mit anders ausgebildeten Bohrern 2, 3 bestückt werden, als sie in den Zeichnungen dargestellt sind. Beispielsweise kann der zentrale Bohrer 3 ein Glasbohrer sein oder der glockenförmige Bohrer 2 mit einer Diamantbeschichtung an seiner ringförmigen Stirnseite versehen sein. Es ist auch vorgesehen, dass der Halter lediglich einen Kernbohrer 2 oder lediglich einen Bohrer 3 mit Spitze trägt.

**Bezugszeichenliste**

| | | | |
|---|---|---|---|
| 1 | Halter | | |
| 2 | Bohrer (zylindrisch) | | |
| 3 | Zentrierbohrer | | |
| 4 | Antriebsschaft | | |
| 5 | Aufnahmeöffnung | | |
| 6 | Boden | | |
| 7 | Axialkanal | | |
| 8 | Sackbohrung | | |
| 9 | Distanzstück | | |
| 10 | Fenster | | |
| 11 | Fenster | | |
| 12 | Querbohrung | | |
| 13 | Mehrkantabschnitt | | |
| 14 | Antriebsflansch, | | |
| 15 | Aussparung | | |
| 16 | Blockierkugel, kuppelförmige Erhebung | | |
| 17 | Außengewinde | | |
| 18 | Mehrkantabschnitt | | |
| 19 | Außenwand | | |
| 20 | Stirnseite | | |
| 21 | Zentrumsbohrung | | |
| 22 | Kontermutter | | |
| 23 | Verriegelungskugel | | |
| 24 | Schaft | | |
| 25 | Ringnut | | |
| 26 | Sperrkugel | | |
| 27 | Verriegelungskugel | | |
| 28 | Verriegelungskugel | | |
| 29 | Freigabenische | | |
| 30 | Schrägflanke | | |
| 31 | Verriegelungsschulter | | |
| 32 | Freigabenische | | |
| 33 | Schrägflanke | | |
| 34 | Betätigungshülse | 34' | Rand |
| 35 | Druckfeder | | |
| 36 | Dichtung | | |
| 37 | Schutzkappe | | |
| 38 | Manschette | | |
| 39 | Stirnseite | | |
| 40 | Bohrung | | |
| 41 | Vertiefung | | |

## Patentansprüche

1. Schnellwechseladapter für spanabhebende Werkzeuge, insbesondere eine Lochsäge oder einen Bohrer, mit einem Antriebsschaft (4) zum Einstecken in ein Antriebsfutter einer Drehantriebsvorrichtung, einer Aufnahmeöffnung (5) zur Aufnahme eines Antriebsflansches (14), insbesondere eines zylindrischen Bohrers (2) und einer Betätigungshülse (34), die von einer Verriegelungsstellung, in der ein Verriegelungselement (23) vor einer Blockierschulter des Antriebsflansches (14) liegt, um den Antriebsflansch (14) gegen ein Herausziehen aus der Aufnahmeöffnung (5) zu sichern, in eine Freigabestellung bringbar ist, in der sich das Verriegelungselement (23) ein Herausziehen des Antriebsflansches (14) aus der Aufnahmeöffnung (5) ermöglichend von der Blockierschulter entfernen kann, **dadurch gekennzeichnet, dass** die Blockierschulter eine kuppelförmige Erhebung (16) ist, die von einer in einer Aussparung (15) einsteckenden, insbesondere dort eingeklebten oder eingepressten Kugel (16) gebildet ist.

2. Schnellwechseladapter nach Anspruch 1, **dadurch gekennzeichnet, dass** die kuppelförmige Erhebung (16) einer im Wesentlichen glattwandigen Außenwand (19) entspringt und die Innenwand der den Antriebsflansch (14) im Wesentlichen formausfüllend aufnehmenden Aufnahmeöffnung (5) eine Axialnut (7) aufweist, in der die kuppelförmige Erhebung (16) liegt.

3. Schnellwechseladapter nach einem der vorhergehenden Ansprüche, **dadurch gekennzeichnet, dass** die kuppelförmige Erhebung (16) im rückwärtigen Endbereich des Antriebsflansches (14) angeordnet ist.

4. Schnellwechseladapter nach einem der vorhergehenden Ansprüche, **gekennzeichnet durch** einen Zentrierbohrer (3), dessen Schaft (24) eine Zentrumsbohrung (21) des Antriebsflansches (14) durchragt und mit einem zweiten Verriegelungselement (26, 27) am Halter (4) verriegelt ist.

5. Schnellwechseladapter nach Anspruch 4, **dadurch gekennzeichnet, dass** beide Verriegelungselemente (23; 26, 27) von der Betätigungshülse (34) in ihrer Verriegelungsstellung gehalten werden und durch eine Axialverlagerung der Betätigungshülse (34) in ihre Freigabestellung bringbar sind.

6. Schnellwechseladapter nach Anspruch 4 oder 5, **dadurch gekennzeichnet, dass** die Verriegelungselemente (23; 26, 27) beim Verlagern der Betätigungshülse (34) von der Verriegelungsstellung nacheinander in die Freigabestellung treten.

7. Schnellwechseladapter nach Anspruch 4 bis 6, **dadurch gekennzeichnet, dass** die Verriegelungselemente (23; 26, 27) Kugeln oder dergleichen aufweisen, die in ihrer Verriegelungsstellung jeweils vor einer Verriegelungsschulter (28, 31) der Betätigungshülse (34) liegen und in der Freigabestellung radial nach außen in eine Freigabenische (29, 32) der Betätigungshülse (34) ausweichen können, wobei Übergangszonen (30, 33) insbesondere in Form von Schrägflanken einen Abstand voneinander haben, der kleiner oder größer ist, als der Abstand der Kugeln (23,27).

8. Schnellwechseladapter nach Anspruch 4 bis 7, **dadurch gekennzeichnet, dass** das dem Bohrer, insbesondere einem Zentrierbohrer (3) zugeordnete Verriegelungselement zwei Kugeln (26, 27) aufweist, die in Radialrichtung nebeneinander in einem als Bohrung gestalteten Fenster (11) liegen, wobei eine Kugel (26) in der Verriegelungsstellung in einer Ringnut (25) des Schaftes (24) einliegt und eine zweite Kugel (27) in der Verriegelungsstellung vor einer Verriegelungsschulter (31) liegt.

9. Schnellwechseladapter nach Anspruch 4 bis 8 , **dadurch gekennzeichnet, dass** sich der Schaft (24) des Bohrers, insbesondere des Zentrierbohrers (3) an einem in einer von einer durchmesserverminderten Verlängerung der Aufnahmeöffnung (5) gebildeten Sackbohrung (8) steckenden Distanzstück (9) abstützt.

## Claims

1. Quick-change adapter for cutting tools, in particular a hole saw or a drill, comprising a drive shaft (4) for inserting into a drive chuck of a rotary drive apparatus, a receiving opening (5) for receiving a drive flange (14), in particular of a cylindrical drill (2) and an actuating sleeve (34), which can be moved from a locked position, in which a locking element (23) is positioned upstream of a blocking collar of the drive flange (14) in order to secure the drive flange (14) against being pulled out of the receiving opening (5), into a released position, in which the locking element (23) can be removed from the blocking collar in a manner that allows the drive flange (14) to be pulled out of the receiving opening (5), **characterised in that** the blocking collar is a dome-shaped elevation (16) which is formed by a sphere (16) inserted in a recess (15), in particular glued or pressed therein.

2. Quick-change adapter according to claim 1, **characterised in that** the dome-shaped elevation (16) projects from a substantially smooth outer wall (19) and the inner wall of the receiving opening (5) that receives the drive flange (14) in a substantially form-filling manner comprises an axial groove (7) in which the dome-shaped elevation (16) is positioned.

3. Quick-change adapter according to any of the preceding claims, **characterised in that** the dome-shaped elevation (16) is arranged in the rear end region of the drive flange (14).

4. Quick-change adapter according to any of the preceding claims, **characterised by** a centring drill (3), the shank (24) of which projects through a central bore (21) of the drive flange (14) and is locked to the holder (4) by means of a second locking element (26, 27).

5. Quick-change adapter according to claim 4, **characterised in that** the two locking elements (23; 26, 27) are held in their locked position by the actuating sleeve (34) and can be moved into their released position by an axial movement of the actuating sleeve (34).

6. Quick-change adapter according to either claim 4 or claim 5, **characterised in that** the locking elements (23; 26, 27) move from the locked position into the released position one after the other when the actuation sleeve (34) is moved.

7. Quick-change adapter according to any of claims 4 to 6, **characterised in that** the locking elements (23; 26, 27) comprise spheres or the like which, in their locked position, are each positioned upstream of a locking collar (28, 31) of the actuating sleeve (34) and, in the released position, can shift radially outwards into a release recess (29, 32) of the actuating sleeve (34), transition zones (30, 33), in particular in the form of inclined edges, having a mutual spacing which is smaller or larger than the spacing between the spheres (23, 27).

8. Quick-change adapter according to any of claims 4 to 7, **characterised in that** the locking element assigned to the drill, in particular to a centring drill (3), comprises two spheres (26, 27) which are positioned radially adjacently in a window (11) shaped as a hole, a sphere (26) being inserted in the locked position in an annular groove (25) of the shank (24) and a second sphere (27) being positioned upstream of a locking collar (31) in the locked position.

9. Quick-change adapter according to any of claims 4 to 8, **characterised in that** the shank (24) of the drill, in particular of the centring drill (3), is supported on a spacer (9) fitted in a blind hole (8) formed by an extension of the receiving opening (5), which extension has a reduced diameter.

## Revendications

1. Adaptateur à changement rapide pour outils à enlèvement de copeaux, en particulier une scie cloche ou un forêt, comprenant un arbre d'entraînement (4) destiné à être inséré dans un mandrin d'entraînement d'un dispositif d'entraînement rotatif, une ouverture de réception (5) pour recevoir une bride d'entraînement (14), en particulier un foret cylindrique (2) et une douille d'actionnement (34) laquelle, depuis une position de verrouillage dans laquelle un élément de verrouillage (23) se trouve devant un épaulement de blocage de la bride d'entraînement (14) pour fixer la bride d'entraînement (14) et empêcher le retrait de la bride d'entrainement de l'ouverture de réception (5), peut être amenée dans une position de libération dans laquelle l'élément de verrouillage (23) peut être enlevé de l'épaulement de blocage autorisant le retrait de la bride d'entraînement (14) de l'ouverture de réception (5), **caractérisé en ce que** l'épaulement de verrouillage présente un bossage en forme de dôme (16) lequel est formé par une bille insérée dans un évidement (15), en particulier collée ou pressée dans l'évidement.

2. Adaptateur à changement rapide selon la revendication 1, **caractérisé en ce que** le bossage en forme de dôme (16) démarre d'une paroi extérieure (19) sensiblement lisse et la paroi intérieure de l'ouverture de réception (5) qui reçoit la bride d'entraînement (14) en étant remplie par celle-ci, comprend une rainure axiale (7) dans laquelle se trouve le bossage en forme de dôme (16).

3. Adaptateur à changement rapide selon l'une quelconque des revendications précédentes, **caractérisé en ce que** le bossage en forme de dôme (16) est disposé dans la partie d'extrémité arrière de la bride d'entraînement (14).

4. Adaptateur à changement rapide selon l'une quelconque des revendications précédentes, **caractérisé par** un foret central (3) dont l'arbre (24) traverse un perçage central (21) de la bride d'entraînement (14) et est verrouillé au support (4) avec un deuxième élément de verrouillage (26, 27) .

5. Adaptateur à changement rapide selon la revendication 4, **caractérisé en ce que** les deux éléments de verrouillage (23 ; 26, 27) sont maintenus dans leur position de verrouillage par la douille d'actionnement (34) et peuvent être amenés dans leur position de libération par un déplacement axial de la douille d'actionnement (34).

6. Adaptateur à changement rapide selon la revendications 4 ou 5, **caractérisé en ce que** les éléments de verrouillage (23 ; 26, 27) passent l'un après l'autre de la position de verrouillage à la position de libération lors du déplacement de la douille d'actionnement (34).

7. Adaptateur à changement rapide selon l'une quelconque des revendications 4 à 6, **caractérisé en ce que** les éléments de verrouillage (23 ; 26, 27) comprennent des billes ou des éléments similaires qui, dans leur position de verrouillage se trouvent respectivement devant un épaulement de verrouillage (28, 31) de la douille d'actionnement (34), et qui, dans la position de libération, peuvent dévier radialement vers l'extérieur dans une niche de dégagement (29, 32) de la douille d'actionnement (34), des zones de transition (30, 33), en particulier sous la forme de flancs inclinés, ayant un espacement entre elles qui est plus petit ou plus grand que l'espacement des billes (23, 27).

8. Adaptateur à changement rapide selon l'une quelconque des revendications 4 à 7, **caractérisé en ce que** l'élément de verrouillage associé à un foret, en particulier à un foret de centrage (3), comprend deux billes (26, 27), qui se trouvent côte à côte dans une direction radiale dans une fenêtre (11) en forme de perçage, dans lequel une bille (26) est engagée dans une gorge annulaire (25) de l'arbre (24) dans la position de verrouillage et une deuxième bille (27) se trouve devant un épaulement de verrouillage (31) dans la position de verrouillage.

9. Adaptateur à changement rapide selon l'une quelconque des revendications 4 à 8, **caractérisé en ce que** l'arbre (24) du foret, en particulier du foret central (3), se trouve en appui contre une entretoise (9) insérée dans un trou borgne (8) formé par un prolongement de diamètre réduit de l'ouverture de réception (5).
